# EUROPEAN PATENT APPLICATION

(11) **EP 4 610 817 A1**
(43) Date of publication of application: **03.09.2025**
(21) Application number: 23890490.8
(22) Date of filing: 23.10.2023
(51) Int. Cl.: G06F 8/75

(54) **CODE VIEWING METHOD AND APPARATUS, DEVICE CLUSTER, AND STORAGE MEDIUM**

(30) Priority: 14.11.2022 CN 202211423568
(71) Applicant: Huawei Cloud Computing Technologies Co., Ltd., Guiyang, Guizhou 550025 (CN)
(72) Inventor: CHEN, Anpeng, Shenzhen, Guangdong 518129 (CN); LIU, Yue, Shenzhen, Guangdong 518129 (CN); CAO, Bei, Shenzhen, Guangdong 518129 (CN)
(74) Representative: Körber, Martin Hans
(86) International application number: PCT/CN2023/125843
(87) International publication number: WO 2024/104054

(57) **Abstract**

This application provides a code review method, an apparatus, a device cluster, and a storage medium. The method includes: presenting program code and a document on a code review interface in a column-based manner or a split-screen manner, and presenting an association relationship between the program code and the document, where an association manner may be automatically or manually associating the program code with a function description in the document. If the program code or the document changes, the association relationship can be automatically updated and modified. This method can save energy and time of a reviewer, to improve code review quality and efficiency.

## Description

This application claims priority to Chinese Patent Application No. 202211423568.5, filed with the China National Intellectual Property Administration on November 14, 2022 and entitled "CODE REVIEW METHOD, APPARATUS, DEVICE CLUSTER, AND STORAGE MEDIUM", which is incorporated herein by reference in its entirety.

### TECHNICAL FIELD

This application relates to the field of computer technologies, and in particular, to a code review method, an apparatus, a device cluster, and a storage medium.

### BACKGROUND

Code review (Code Review, CR) is to review source code of a computer according to a specific rule, to ensure that the code can resolve a problem and comply with an architecture and a coding rule. The code review is critical to improving code quality and software development efficiency.

During software development, a developer first completes a solution design. After the development is completed, code review is usually performed. During the code review, a code reviewer needs to check a problem of the code, and more importantly, to learn about a code intent and a service solution. In other words, during the code review, the reviewer needs to refer to a solution design document of a requirement. Details of the solution design are first understood, the code intent is then understood, and the code is compared with the design document. In this way, potential problems in a code implementation can be detected, for example, whether there is an implementation error or omission, or whether meaningless code is added.

If the code reviewer does not learn about a code modification background, the code reviewer needs to open the corresponding solution design document (which may be a description of a working task on an online task tracing platform, an online document library, an offline Word library, or content of a cell in Excel for offline task tracing) of the requirement, to view a code function design background and solution implementation details. After reading the document, the reviewer manually compares the design with actually implemented code, to check problems such as an error and an omission in the code, and then asks, through comments, offline communication, and the like, the developer to modify the code, to ensure that the code is complete and meets the requirement.

Such a code check manner that completely depends on manual comparison between the code and the corresponding solution design document poses a high requirement on service and system familiarity of the reviewer. If the reviewer cannot fully understand the requirement background, the solution design, and associated information, the reviewer may easily ignore problems such as an error and a function omission in the code. This operation manner consumes a large amount of energy and time of the reviewer, and cannot ensure function integrity and consistency of code that is successfully reviewed. As a result, software review efficiency and quality are low.

### SUMMARY

This application provides a code review method, an apparatus, a device cluster, and a storage medium, to save energy and time of a reviewer, and improve code review quality and efficiency.

According to a first aspect, a code review method is provided. The method includes: First, a developer platform obtains program code and a document associated with the program code; and then the developer platform presents, on a code review interface, a first association relationship between first function code in the program code and a first function description in the document, where the first function description is used to describe a function implemented by the first function code, and the code review interface is used to perform code review on the first function code.

It can be learned from the foregoing solution that, in this application, when a reviewer performs a code review operation, a reference design document may be synchronously obtained, and the reviewer does not need to manually obtain and open the design document corresponding to the program code, search for document description content related to the program code, and understand a code implementation intent. This saves energy and time of the reviewer, and improves code review quality and efficiency.

With reference to the first aspect, in a possible implementation, the method includes: The developer platform identifies, in the document, a second function description implemented by second function code in the program code; and associates the second function code with the second function description.

In the foregoing implementation, the developer platform identifies function description content that is in the design document and that is implemented by one or more lines of code in the program code, and associates the function description content with the code. Then, based on the association relationship, the reviewer can quickly obtain the code implementation intent during the code review. Even if the design document is not read through, the reviewer can still quickly understand the design solution and determine a problem in the program code. This can improve efficiency of obtaining the design document corresponding to the program code and code review efficiency.

With reference to the first aspect, in another possible implementation, the method may specifically include: The developer platform determines, in the document based on a code commit message of third function code in the program code, a third function description implemented by the third function code; and associates the third function code with the third function description.

The code commit message is a commit message that needs to be entered by a code developer each time the code developer commits code of a specific module function after completing the code, to indicate content and a purpose of this commit. If the commit message matches a segment of description content in the design document, the developer platform associates the code committed this time with the corresponding document content without manual association. This can avoid complexity and high-cost problems caused by manual association, and make the code developer accurately enter the commit message, thereby improving association efficiency.

In another possible implementation, the method specifically includes: The developer platform determines, in the document based on code comment information of fourth function code in the program code, a fourth function description implemented by the fourth function code; and the developer platform associates the fourth function code with the fourth function description.

A code comment is an explanation or a description of code content when the code developer compiles the program code. If the code comment matches a segment of content in the design document, the developer platform associates the segment of code with the corresponding document content without manual association. This can promote standardization of the code comment, make the code developer use the description content in the design document to make a comment, and improve association efficiency.

With reference to the first aspect and any possible implementation of the first aspect, in another possible implementation of the first aspect, the method includes: The developer platform changes the first association relationship to a fifth association relationship, where the fifth association relationship is used to associate the first function code with a fifth function description in the document, and the fifth function description is a correct description of the function implemented by the first function code.

In a possible implementation, the method includes: The developer platform associates sixth function code in the program code with a sixth function description in the document based on an operation of a user.

In another possible implementation, that the developer platform presents, on a code review interface, a first association relationship between first function code in the program code and a first function description in the document includes: the developer platform presents the first function code and the first function description on the code review interface in a column-based manner or a split-screen manner.

In the foregoing implementation, with reference to the association relationship between the program code and the document, the reviewer can quickly obtain the function description in the document corresponding to the program code for a review. The reviewer does not need to manually obtain and open the design document corresponding to the program code. This helps the reviewer understand a requirement background and association information of the program code, saves energy and time of the reviewer, and improves code review efficiency and quality.

According to a second aspect, a developer platform is provided. The platform includes: an obtaining module, configured to obtain program code and a document associated with the program code; and a presentation module, configured to present, on a code review interface, a first association relationship between first function code in the program code and a first function description in the document, where the first function description is used to describe a function implemented by the first function code, and the code review interface is used to perform code review on the first function code.

With reference to the second aspect, in a possible implementation, the developer platform further includes an association module, configured to: identify, in the document, a second function description implemented by second function code in the program code; and associate the second function code with the second function description.

With reference to the second aspect, in another possible implementation, the association module is configured to: determine, in the document based on a code commit message of third function code in the program code, a third function description implemented by the third function code; and associate the third function code with the third function description.

In another possible implementation, the association module is configured to: determine, in the document based on code comment information of fourth function code in the program code, a fourth function description implemented by the fourth function code; and associate the fourth function code with the fourth function description.

With reference to the second aspect and any possible implementation of the second aspect, in another possible implementation of the second aspect, the association module is configured to change the first association relationship to a fifth association relationship, where the fifth association relationship is used to associate the first function code with a fifth function description in the document, and the fifth function description is a correct description of the function implemented by the first function code.

In a possible implementation, the association module is configured to associate sixth function code in the program code with a sixth function description in the document based on an operation of a user.

In another possible implementation, the presentation module is configured to present the first function code and the first function description on the code review interface in a column-based manner or a split-screen manner.

According to a third aspect, a computing device cluster is provided. The computing device cluster includes at least one computing device, and each computing device includes a processor and a memory. The processor of the at least one computing device is configured to execute instructions stored in the memory of the at least one computing device, so that the computing device cluster performs the method provided in the first aspect or any possible implementation of the first aspect.

According to a fourth aspect, a computer program product including instructions is provided. When the instructions are run by a computing device cluster, the computing device cluster is enabled to perform the method provided in the first aspect or any possible implementation of the first aspect.

According to a fifth aspect, a computer-readable storage medium is provided, including computer program instructions. When the computer program instructions are executed by a computing device cluster, the computing device cluster performs the method provided in the first aspect or any possible implementation of the first aspect.

### BRIEF DESCRIPTION OF DRAWINGS

FIG. 1 is a diagram of an application scenario according to this application;
FIG. 2 is a diagram of another application scenario according to this application;
FIG. 3 is an architectural diagram of a code review method according to this application;
FIG. 4 is a schematic flowchart of an association process according to this application;
FIG. 5 is a schematic flowchart of a code review process according to this application;
FIG. 6 is a diagram of a structure of a developer platform according to this application;
FIG. 7 is a diagram of a structure of a computing device cluster according to this application; and
FIG. 8 is a diagram of a structure in which computing devices are connected through a network according to this application.

### DESCRIPTION OF EMBODIMENTS

This application provides a code review method, an apparatus, a device cluster, and a storage medium, which are described below with reference to the accompanying drawings.

To make the technical solutions provided in this application clearer, before the technical solutions provided in this application are specifically described, related terms are first explained.
(1) Code review (Code Review, CR): The CR is to review source code of a computer according to a specific rule. A purpose of the code review is to find and correct an error that is not found in an early stage of software development, ensure that the code complies with an architecture and a coding rule, and improve software quality and technologies of a developer.
(2) Reviewer: The reviewer is a technical person that checks and reviews, through difference comparison between code before and after code modification, whether the code has a problem or an omission.
(3) Code hosting platform (Code Hosting Platform): The code hosting platform is a code management platform provided for developers. The code hosting platform has functions such as security control, branch protection, online editing, and a statistics service, and aims to resolve problems of a software developer in cross-region collaboration, multi-branch concurrency, code version management, security, and the like.
(4) Agile project management (Agile Project Management): The agile project management is an interactive method for software development management, and is a process in which a software development team uses agile concepts and professional knowledge, skills, tools, and methods to make a project implement or exceed a preset requirement and expectation with limited resources in a project activity.
(5) Commit message (Commit Message): The commit message is a commit message entered by a code developer when code is committed, and indicates content and a purpose of this commit. The message committed by the code developer needs to be in a unified format and be clear and easy to read. The purpose of this commit can be learned about based on the commit message, to facilitate code review.
(6) Code comment (Code Comment): The code comment is an explanation and a description of code, and a purpose of the code comment is to improve readability of the program code.

This application provides a code review method, an apparatus, a device cluster, and a storage medium, to ensure that when a reviewer performs a code review operation, the reviewer accurately understands a correspondence between a design intent and a code intent, and then performs code review based on an association relationship between program code and a design document. The reviewer does not need to manually obtain and open the design document corresponding to the code to view the code intent. This saves energy and time of the reviewer, and improves code review quality and efficiency.

The following briefly describes an application scenario in embodiments of this application.

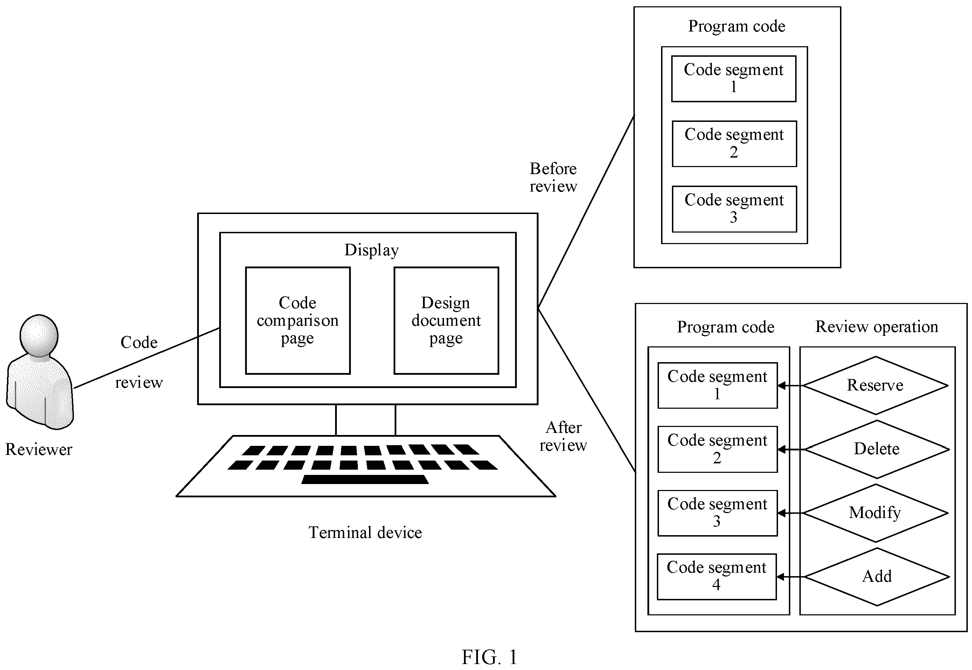

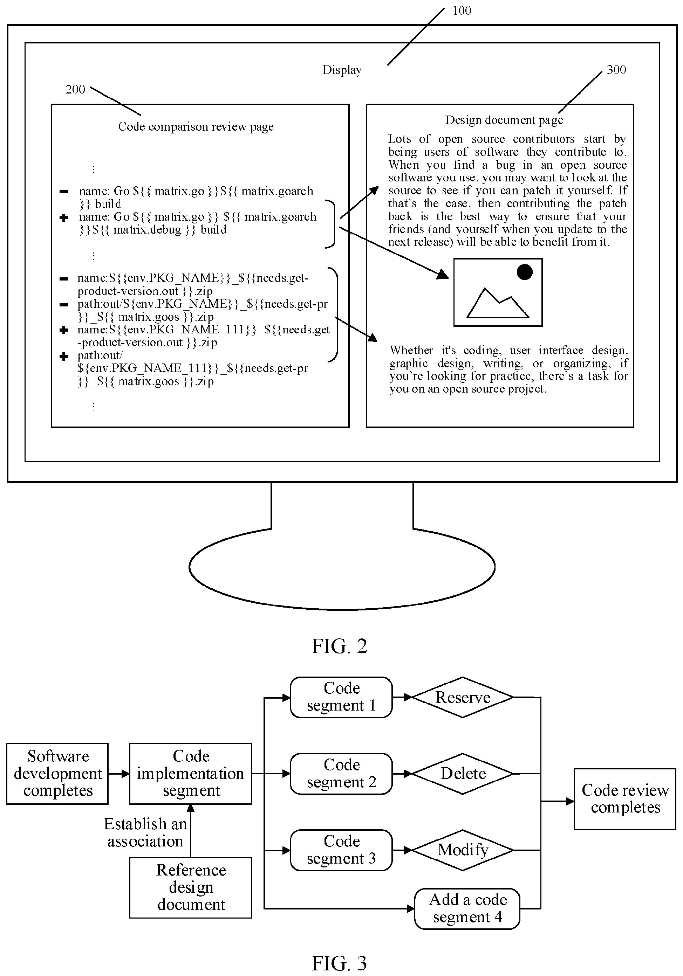

Refer to FIG. 1 and FIG. 2. FIG. 1 and FIG. 2 are example diagrams of two application scenarios shown in this application. An application scenario shown in FIG. 1 specifically corresponds to a scenario in which a reviewer performs code review through an independent terminal device, and an application scenario shown in FIG. 2 specifically corresponds to a scenario in which a reviewer performs code review through a code review platform.

In the application scenario shown in FIG. 1, the terminal device may be any device that has program development and display functions, for example, a personal computer or a notebook computer. A code developer may develop software by using the program development function on the terminal, and the reviewer may check and modify code by using the display function of the terminal device. During code review, the reviewer usually needs to refer to a solution design document of a requirement, and performs the code review after understanding solution design details and a code intent. Therefore, the terminal device needs to present the program code and the design document on a display in columns, so that the reviewer synchronously obtains the reference design document during the code review. During the code review, the reviewer performs corresponding review operations on the program code, as shown in FIG. 1, such as maintaining a code segment 1, deleting a code segment 2, modifying a code segment 3, and adding a code segment 4. The "code segment 1", the "code segment 2", and the like are paragraphs formed by one line or a plurality of lines of code of a code segment of a specific piece of function code.

In the application scenario shown in FIG. 2, the code review platform may be any online platform or desktop application that may have a code review page, for example, a code hosting platform or agile project management. The code review platform includes a display 100 of a terminal device, a code comparison review page 200, and a design document page 300.

The display 100 may be of any terminal device that has a computer display function, for example, a personal computer or a notebook computer. A code review display function of the display 100 may be a review interface of an internal code development platform for software developers. Alternatively, the code may be uploaded, for reviewing, to an external online software library (such as Subversion, Mercurial, or Git) that is for open source code. The reviewer can implement the code review through the computer display function of the terminal device. On a code review display, the program code and the design document are synchronously presented in a left-right column manner, a top-bottom column manner, or a split-screen manner. During the code review, the reviewer can open the related design document.

The code comparison review page 200 is used by the reviewer to check whether the code meets a requirement of the solution design document, whether there is any implementation deviation or omission, or whether some meaningless code is added. Code content displayed on the code comparison review page 200 is code comparison content to be modified in this requirement, and "-" and "+" are respectively used before the program code to indicate to-be-deleted code and to-be-added code.

The design document page 300 is used by the reviewer to understand the solution requirement and the code intent during the code review. On the code review page, the reviewer can synchronously obtain the reference design document during the code review. The design document may be online document content that is automatically opened or manually selected for opening, or may be an imported Word document or the like.

As shown in FIG. 2, an association identifier between the code comparison review page and the design document on the right side indicates that there is an association information between an enclosed part of the program code and one or more pieces of content in the document. The program code enclosed on the left side may have one line or a plurality of lines, and the associated document content on the right side may be a paragraph, a picture, a model diagram element, or the like, namely, any element in the document. When the reviewer taps the association identifier in the middle, the document on the right side prompts a correspondence between this segment of code and the document content in a manner like automatic positioning or highlighting. This helps the reviewer quickly compare the program code with the content of the design document, to quickly interpret accuracy of a code implementation.

First, a code review method provided in this application is described with reference to an architectural diagram shown in FIG. 3. In a process in which the reviewer performs the code review through the code review platform shown in FIG. 2, an association relationship between the program code and the design document usually needs to be established first. After the software developer completes the software development, when checking the code, the code reviewer needs to refer to the solution design document of the requirement. After understanding the solution details and the code intent, the code reviewer compares the code with the design document before reviewing the code. When the reviewer does not learn about a code modification background, the reviewer needs to open the corresponding design document of the requirement, and compare the design document with actually implemented code, to check problems such an error and an omission in the code. However, this manner completely depends on manual check and comparison. As a result, the reviewer may easily miss problems such as an error and an omission in the code without well understanding the requirement background, the solution design, and association information, and function integrity and consistency of code that is successfully reviewed cannot be ensured.

To resolve the foregoing problem, the reviewer establishes an association relationship between the program code and element content such as an article paragraph, a picture, and a graphic element in the design document during the code review. Then, based on the association relationship, the reviewer can quickly obtain a code implementation intent during the code review. Even if the design document is not read through, the reviewer can still quickly understand the design solution and identify a problem in the program code, to complete the code review.

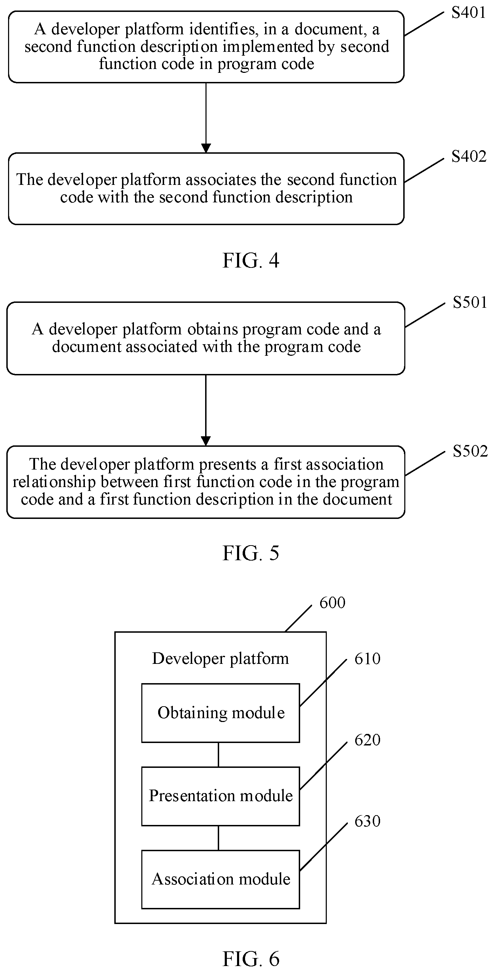

As shown in FIG. 4, this application provides an association procedure. The association procedure includes step S401 and step S402.

Step S401: A developer platform identifies, in a document, a second function description implemented by second function code in program code.

The developer platform identifies, in the document, the second function description implemented by the second function code in the program code, where the program code is code comparison content to be modified in this requirement, and the document is a solution design document of this requirement.

Step S402: The developer platform associates the second function code with the second function description.

When the second function code is associated with the second function description, the developer platform generates an association identifier between the second function code and the second function description. When the association identifier is tapped, the association relationship can be automatically positioned and highlighted.

In an example implementation of step S402, a third function description is determined based on a code commit message of third function code, and association is performed.

The developer platform determines, in the document based on the code commit message of the third function code, the third function description implemented by the third function code; and associates the third function code with the third function description.

Specifically, a code developer usually commits code once after completing a small module function. When the code is committed, a commit message is entered to indicate content and a purpose of this commit. For example, when the code developer commits the third function code after completing the code, the code developer commits a "solution design" in a code commit box. In this case, a system automatically identifies the content "solution design" in the third function description of the corresponding design document and performs automatic association.

If the third function code is the second function code, the third function description is the second function description.

In another example implementation of step S402, a fourth function description is determined based on code comment information of fourth function code, and association is performed.

The developer platform determines, in the document based on the code comment information of the fourth function code, the fourth function description implemented by the fourth function code; and associates the fourth function code with the fourth function description.

Specifically, when compiling the program code, the code developer explains or prompts code content. For example, when compiling the fourth function code, the code developer adds a comment "comment feedback" to the segment of code. In this case, the system automatically identifies related content of the "comment feedback" in the fourth function description of the corresponding design document, and performs automatic association. Standardization of the code comment directly affects subsequent code maintainability and code readability.

If the fourth function code is the second function code, the fourth function description is the second function description.

In another example implementation of step S402, the developer platform associates fifth function code with a fifth function description based on an operation of a user.

In a specific implementation, if automatic association between the fifth function code and the fifth function description fails, and an error is identified, the developer platform may directly associate the fifth function code with the fifth function description based on the operation of the user. A specific operation is to tap and drag an association identifier of the fifth function code to an area of the fifth function description. The fifth function description automatically identifies an indicated element area and highlights the element area. The association succeeds when a mouse is released.

If the fifth function code is the second function code, the fifth function description is the second function description.

In this application, when an association error occurs, the developer platform may change the first association relationship to a fifth association relationship, where the fifth association relationship is used to associate the first function code with the fifth function description, and the fifth function description is a correct description of a function implemented by the first function code.

In a possible embodiment, if content of the first function description associated with the first function code is incomplete, and a content description of the fifth function description is more complete and detailed, the developer platform associates the first function code with the fifth function description.

In another possible embodiment, when the first function code is inconsistent with the content of the first function description, the developer platform can detect an exception and change the association relationship. There are the following two scenarios.

Scenario 1: When a plurality of segments of code in the first function code are associated with a same segment of document content in the first function description, it is theoretically normal, because the same segment of document content may need to be implemented by the plurality of segments of code. However, if most code in the first function code is associated with a same segment of document content, an exception may be detected. When a segment of code is associated with a plurality of segments of document content, an exception may also occur, because a segment of code usually does not implement a plurality of segments of related content in the document.

In a specific implementation, after the association is generated, when an exception occurs because the first function code is inconsistent with the first function description, the exception is detected, and it is determined again whether the association is incorrect.

Scenario 2: Before this requirement is brought online or is released, if the content of the first function description is updated, deleted, or the like, and a modified part is associated with the first function code, it is detected that the code may be inconsistent with a document implementation, and the code developer needs to be notified whether to modify the first function code. After this requirement is brought online, if the first function code needs to be modified because of a code bug modification or a new optimization requirement, the to-be-modified code is previously associated with the first function description, and code obtained through modification may be inconsistent with the first function description, the document needs to be modified or the association relationship needs to be changed.

In this application, as shown in FIG. 5, a specific process of performing code review based on an association relationship may include the following step S501 and step S502.

Step S501: A developer platform obtains program code and a document associated with the program code.

The developer platform obtains the program code and the document associated with the program code before a reviewer reviews the code.

Step S502: The developer platform presents a first association relationship between first function code in the program code and a first function description in the document.

The developer platform presents, on a code review interface, the first association relationship between the first function code in the program code and the first function description in the document, where the first function description is used to describe a function implemented by the first function code. The first association relationship can ensure that the code has sufficient association information for a comparison review during code review, so that an error in the first function code is more easily found.

On the code review interface, a column manner is used for presentation, where a left column is the document and a right column is the program code. Optionally, a split-screen manner with a primary screen and a secondary screen may be used for display, where a left screen is the program code, and a right screen is the design document. An association identifier between a code comparison page and the design document indicates that there is an association relationship between the program code and the design document. The association identifier is tapped to highlight document element content associated with the program code. Based on the association relationship, the reviewer can quickly obtain the corresponding design content of the program code, understand a design solution, identify potential problems in a code implementation stage, and check whether there is any implementation omission or deviation, or whether some meaningless code is added.

In this application, the second association relationship obtained by associating the second function code with the second function description in step S402 may be the first association relationship presented in step S502. A difference lies in that step S402 is in an association stage and step S502 is in a presentation stage. In other words, when the first function code is the same as the second function code, the first function description is the same as the second function description. Alternatively, the second association relationship obtained by associating the second function code with the second function description in step S402 is not the first association relationship presented in step S502. In other words, the first association relationship presented in step S502 is not the second association relationship obtained through association in step S402.

In this application, based on the association relationship between the program code and the document, the code implementation may be reversely traced from a perspective of the design document. Specifically, after a requirement is brought online or delivered, a code developer can trace, in the program code, a specific implementation of a specific detail in the design document. In a review stage, the reviewer can perform a reverse review from the design document. The reviewer can tap the association identifier on the right side of the document to reversely present associated program code content and find specific implementation code for a function description of this segment of document, to implement reverse tracing and reverse reviewing of the code.

In conclusion, according to the method provided in this application, the association relationship between the program code and the document may be presented in columns or split screens on the code review interface, and the function description in the document associated with the program code can be automatically positioned and highlighted by tapping the association identifier. With reference to the association relationship, the reviewer can quickly obtain the function description in the document corresponding to the program code for a review, and the reviewer does not need to manually obtain and open the design document corresponding to the program code to view the design solution and a code implementation intent. This helps the reviewer understand a requirement background and association information of the program code, saves energy and time of the reviewer, and improves code review efficiency and quality.

The foregoing describes in detail the code review method provided in this application. To better implement the foregoing solutions provided in this application, correspondingly, the following further provides a developer platform, a device cluster, and a storage medium that are configured to cooperate in implementing the foregoing solutions.

The developer platform provided in this application may be used in the terminal device shown in FIG. 1, or may be used in the code review platform shown in FIG. 2. FIG. 6 is a diagram of a structure of a developer platform 600 according to this application. The developer platform 600 includes an obtaining module 610, a presentation module 620, and an association module 630.

The obtaining module 610 is configured to obtain program code and a document associated with the program code.

The presentation module 620 is configured to present, on a code review interface, a first association relationship between first function code in the program code and a first function description in the document, where the first function description is used to describe a function implemented by the first function code, and the code review interface is used to perform code review on the first function code.

The association module 630 is configured to: identify, in the document, a second function description implemented by second function code in the program code; and associate the second function code with the second function description.

In a possible implementation, the association module 630 is configured to: determine, in the document based on a code commit message of third function code in the program code, a third function description implemented by the third function code; and associate the third function code with the third function description.

In a possible implementation, the association module 630 is configured to: determine, in the document based on code comment information of fourth function code in the program code, a fourth function description implemented by the fourth function code; and associate the fourth function code with the fourth function description.

In a possible implementation, the association module 630 is configured to change the first association relationship to a fifth association relationship, where the fifth association relationship is used to associate the first function code with a fifth function description in the document, and the fifth function description is a correct description of the function implemented by the first function code.

In a possible implementation, the association module 630 is configured to associate sixth function code in the program code with a sixth function description in the document based on an operation of a user.

In a possible implementation, the presentation module 620 is configured to present the first function code and the first function description on the code review interface in a column-based manner or a split-screen manner.

Specifically, for specific implementations of performing various operations by the developer platform 600 provided in this application, refer to the descriptions of the related content in the foregoing embodiments of the code review method. For brevity of the specification, details are not described herein again.

In conclusion, the developer platform provided in this application is shown in FIG. 6. The obtaining module 610 can obtain the program code and the document associated with the program code, and then the presentation module 620 presents, on the code review interface, the first association relationship between the first function code and the first function description. The code review interface is used to perform code review on the first function code, and a reviewer does not need to manually open the first function description corresponding to the first function code. This saves energy and time of the reviewer, and improves code review efficiency.

This application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

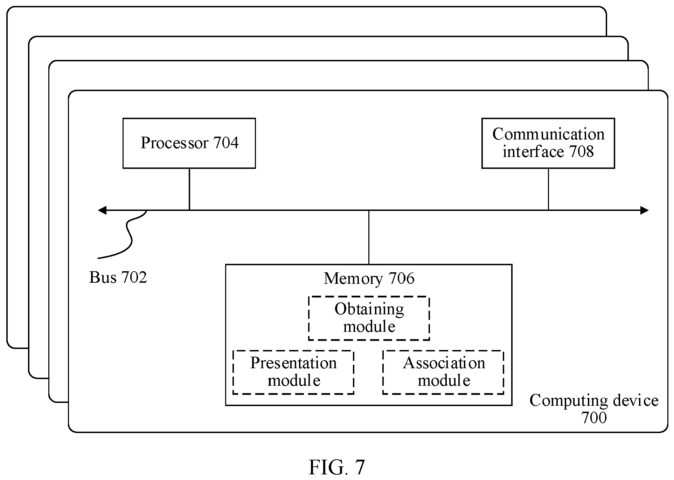

As shown in FIG. 7, the computing device cluster includes at least one computing device 700. Memories 706 in one or more computing devices 700 in the computing device cluster may store same instructions that are used to perform the code review method.

In some possible implementations, the memories 706 in the one or more computing devices 700 in the computing device cluster may alternatively separately store some instructions used to perform the code review method. In other words, a combination of the one or more computing devices 700 may jointly execute the instructions used to perform the code review method.

It should be noted that memories 706 in different computing devices 700 in the computing device cluster may store different instructions, which are respectively used to perform some functions of a developer platform. In other words, the instructions stored in the memories 706 in the different computing devices 700 may implement functions of one or more modules in an obtaining module, a presentation module, and an association module.

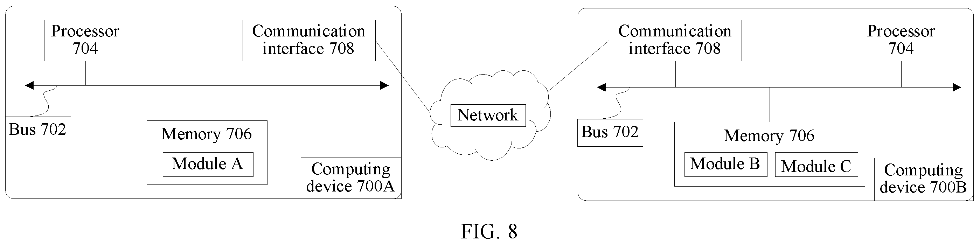

In some possible implementations, the one or more computing devices in the computing device cluster may be connected through a network. The network may be a wide area network, a local area network, or the like. FIG. 8 shows a possible implementation. As shown in FIG. 8, two computing devices 700A and 700B are connected through a network. Specifically, each computing device is connected to the network through a communication interface of the computing device. In this possible implementation, a memory 706 in the computing device 700A stores instructions for executing a function of the obtaining module. In addition, a memory 706 in the computing device 700B stores instructions for executing functions of the presentation module and the association module.

In a connection manner in the computing device cluster shown in FIG. 8, because a large amount of data needs to be stored in the code review method provided in this application, the functions implemented by the presentation module and the association module are executed by the computing device 700B.

It should be understood that functions of the computing device 700A shown in FIG. 8 may alternatively be completed by a plurality of computing devices 700. Similarly, functions of the computing device 700B may alternatively be completed by a plurality of computing devices 700.

An embodiment of this application further provides another computing device cluster. For a connection relationship between computing devices in the computing device cluster, refer to the similar connection manners of the computing device cluster in FIG. 7 and FIG. 8. A difference is that memories 706 in one or more computing devices 700 in the computing device cluster may store same instructions that are used to perform the code review method.

In some possible implementations, the memories 706 in the one or more computing devices 700 in the computing device cluster may alternatively separately store some instructions used to perform the code review method. In other words, a combination of the one or more computing devices 700 may jointly execute the instructions used to perform the code review method.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the code review method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct a computing device to perform the code review method.

The foregoing descriptions are specific implementations of this application. The foregoing specific implementations are merely intended for describing the technical solutions of the present invention, rather than limiting the present invention. Although the present invention is described in detail with reference to the foregoing embodiments, persons of ordinary skill in the art should understand that they may still make modifications to the technical solutions recorded in the foregoing specific implementations or make equivalent replacements to some technical features thereof, Such modifications or replacements do not make the essence of the corresponding technical solutions depart from the protection scope of the technical solutions of the specific implementations of the present invention.

## Claims

1. A code review method, wherein the method comprises:
Obtaining, by a developer platform, program code and a document associated with the program code; and
presenting, by the developer platform on a code review interface, a first association relationship between first function code in the program code and a first function description in the document, wherein the first function description is used to describe a function implemented by the first function code, and the code review interface is used to perform code review on the first function code.

2. The method according to claim 1, wherein the method comprises:
identifying, by the developer platform in the document, a second function description implemented by second function code in the program code; and
associating, by the developer platform, the second function code with the second function description.

3. The method according to claim 1 or 2, wherein the method comprises:
determining, by the developer platform in the document based on a code commit message of third function code in the program code, a third function description implemented by the third function code; and
associating, by the developer platform, the third function code with the third function description.

4. The method according to any one of claims 1 to 3, wherein the method comprises:
determining, by the developer platform in the document based on code comment information of fourth function code in the program code, a fourth function description implemented by the fourth function code; and
associating, by the developer platform, the fourth function code with the fourth function description.

5. The method according to any one of claims 1 to 4, wherein the method comprises:
changing, by the developer platform, the first association relationship to a fifth association relationship, wherein the fifth association relationship is used to associate the first function code with a fifth function description in the document, and the fifth function description is a correct description of the function implemented by the first function code.

6. The method according to any one of claims 1 to 5, wherein the method comprises:
associating, by the developer platform, sixth function code in the program code with a sixth function description in the document based on an operation of a user.

7. The method according to any one of claims 1 to 6, wherein the presenting, by the developer platform on a code review interface, a first association relationship between first function code in the program code and a first function description in the document comprises:
presenting, by the developer platform, the first function code and the first function description on the code review interface in a column-based manner or a split-screen manner.

8. A developer platform, wherein the developer platform comprises:
an obtaining module, configured to obtain program code and a document associated with the program code; and
a presentation module, configured to present, on a code review interface, a first association relationship between first function code in the program code and a first function description in the document, wherein the first function description is used to describe a function implemented by the first function code, and the code review interface is used to perform code review on the first function code.

9. The developer platform according to claim 8, wherein the developer platform comprises:
an association module, configured to: identify, in the document, a second function description implemented by second function code in the program code; and associate the second function code with the second function description.

10. The developer platform according to claim 8 or 9,
the association module is configured todetermine, in the document based on a code commit message of third function code in the program code, a third function description implemented by the third function code; and associate the third function code with the third function description.

11. The developer platform according to any one of claims 8 to 10,
the association module is configured to determine, in the document based on code comment information of fourth function code in the program code, a fourth function description implemented by the fourth function code; and associate the fourth function code with the fourth function description.

12. The developer platform according to any one of claims 8 to 11,
the association module is configured to change the first association relationship to a fifth association relationship, wherein the fifth association relationship is used to associate the first function code with a fifth function description in the document, and the fifth function description is a correct description of the function implemented by the first function code.

13. The developer platform according to any one of claims 8 to 12,
the association module is configured to associate sixth function code in the program code with a sixth function description in the document based on an operation of a user.

14. The developer platform according to any one of claims 8 to 13, wherein
the presentation module is specifically configured to present the first function code and the first function description on the code review interface in a column-based manner or a split-screen manner.

15. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 1 to 7.

16. A computer program product comprising instructions, wherein when the instructions are run by a computing device cluster, the computing device cluster is enabled to perform the method according to any one of claims 1 to 7.

17. A computer-readable storage medium, comprising computer program instructions, wherein when the computer program instructions are executed by a computing device cluster, the computing device cluster performs the method according to any one of claims 1 to 7.
